## Europäisches Patentamt
## European Patent Office
## Office européen des brevets

(19)

(11) Numéro de publication: **0 014 613**
**B1**

(12) **FASCICULE DE BREVET EUROPEEN**

(45) Date de publication du fascicule du brevet: **16.06.82**

(51) Int. Cl.³: **B 23 K 28/00, B 23 K 9/06**

(21) Numéro de dépôt: **80400084.2**

(22) Date de dépôt: **21.01.80**

(54) **Procédé et installation de démarrage automatique d'une torche de coupage plasma.**

(30) Priorité: **01.02.79 FR 7902610**

(43) Date de publication de la demande:
**20.08.80 Bulletin 80/17**

(45) Mention de la délivrance du brevet:
**16.06.82 Bulletin 82/24**

(84) Etats contractants désignés:
**BE DE FR GB IT LU NL SE**

(56) Documents cités:
**CA - A - 862 880**
**DE - A - 1 565 733**
**DE - A - 2 659 188**
**FR - A - 1 242 186**
**FR - A - 1 483 454**
**FR - A - 2 199 492**
**US - A - 4 170 727**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**
(73) Titulaire: **LA SOUDURE AUTOGENE FRANCAISE**
**75, Quai d'Orsay**
**F-75321 Paris Cedex 07 (FR)**

(72) Inventeur: **Berger, Jean-Yves**
**6, Impasse Debucourt**
**F-95550 Bessancourt (FR)**
Inventeur: **Kostelitz, Michel**
**59, avenue des Etats-Unis**
**F-78000 Versailles (FR)**
Inventeur: **Reynaud, Bernard**
**386, Parc de Cassan**
**F-95290 L'Isle Adam (FR)**
Inventeur: **Egee, Raymond**
**18, rue du Général Corbineau**
**F-95660 Champagne-sur-Oise (FR)**

(74) Mandataire: **Leclercq, Maurice et al,**
**L'AIR LIQUIDE SOCIETE ANONYME POUR L'ETUDE ET L'EXPLOITATION DES PROCEDES GEORGES CLAUDE 75, Quai d'Orsay**
**F-75321 Paris Cedex 7 (FR)**

Courier Press, Leamington Spa, England.

Procédé et installation de démanage automatique d'une torche de coupage plasma

Dans le coupage plasma mettant en oeuvre une torche à électrode et tuyère de formation d'un plasma, on utilise un arc électique jaillissant entre l'électrode en métal refractaire et la pièce à découper, tandis qu'un gaz ionisé s'écoule dans l'espace intersticiel entre électrode et tuyère et finalement dans un étranglement de tuyère créant ainsi les conditions de formation d'un plasma d'arc de caractéristiques appropriées.

La puissance électrique est alors fournie par un générateurélectrique à courant continu dont le pôle négatif est connecté à l'électrode de torche et le pôle positif à la pièce.

Dans la mise en oeuvre de cette technique de coupage plasma, il est de règle d'assurer l'approche de la torche vers la pièce à découper jusqu'à une distance correcte de travail telle que l'arc de coupe s'établisse par fermeture du circuit d'alimentation de puissance du générateur électrique, généralement toutefois après avoir amorcé un arc auxiliaire de faible intensité entre électrode et tuyère de torche, de manière à assurer l'ionisation du gaz plasmagène. Dans une forme de mise en oeuvre plus spécialement destinée à l'automatisation, l'installation comporte un mécanisme de transfert de la torche en position, par exemple une crémaillère et un moteur d'avance et de recul, le tout monté sur un chariot de déplacement transversal de la torche selon le joint à découper; on prévoit des moyens de détection de la position correcte de traveil du type à sonde capacitive opérant avec un oscillateur à fréquence fixe (20KHz par exemple) permettant d'obtenir une tension directement fonction de l'écartement entre la pièce et la sonde, elle-même solidaire de la torche, ou par sonde inductive comme décrit dans le brevet FR—A—2 199 492 pour le positionnement d'une électrode de soudure. Par l'intermédiaire d'un circuit électronique, cette tension est géneralement comparée a une valeur de référence qui est choisie par l'opérateur comme image de l'écartement correct de l'opération de coupe.

Cette solution implique la présence d'un dispositif de détection monté sur la torche et d'un circuit de traitement électronique venant compléter les circuits de commande du mécanisme de déplacement torche-pièce, ce qui représents une installation complexe.

D'autre part, le choix de l'écartement torche-piece c'est-à-dire le choix de la valeur de référence dépend, dans ce mode de réalisation, de l'appréciation individuelle de l'opérateur. Or, le choix de cet écartement entre torche et pièce est très important, car un écartement légèrement trop grand ne permet pas à l'arc de s'établir et un écartement légèrement trop faible peut entraîner, par un amorçage brutal de l'arc, la détérioration de la tuyère de torche par projection de métal fondu. La présente invention a pour objet un procédé et une installation de démarrage automatique d'une torche de coupage plasma qui soient simples à mettre en oeuvre et d'une réalisation particulièrement peu onéreuse. Le procédé de l'invention, selon lequel la torche étant montée sur un support à déplacement relatif d'approche et d'éloignement d'une pièce à couper au moyen d'un moteur électrique, on provoque l'approche de ladite torche vers ladite pièce à couper jusqu'à l'apparition d'un signal électrique de mesure de l'écartement correct de coupage entre torche et pièce qui commande l'arrêt dudit moteur et selon lequel, après formation d'un arc auxiliaire d'allumage entre électrode et tuyère, on assure l'établissement d'un arc de puissance de coupage entre électrode et pièce, se caractérise en ce que ledit signal électrique de commande d'arrêt du moteur est constitué par un courant d'un arc de faible puissance qui s'établit directement entre électrode et pièce et qui assure via un relais l'ouverture du circuit d'alimentation du moteur électrique.

L-invention concerne également une installation de démarrage automatique d'une torche de coupage à plasma du type à électrode et tuyère comprenant un générateur de courant de coupage branché entre une électrode et une pièce via un contact, un circuit de formation d'un arc auxiliaire d'allumage entre électrode et tuyère, des moyens de déplacement relatif de la torche par rapport à la pièce comprenant un moteur électrique et cette installation est caractérisée en ce qu'elle comprend en outre un circuit de formation d'arc de faible puissance entre électrode et pièce incorporant un enroulement d'excitation d'un relais placé dans un circuit d'alimentation dudit moteur.

Les caractéristiques et avantages de l'invention ressortiront d'ailleurs de la description qui suit.

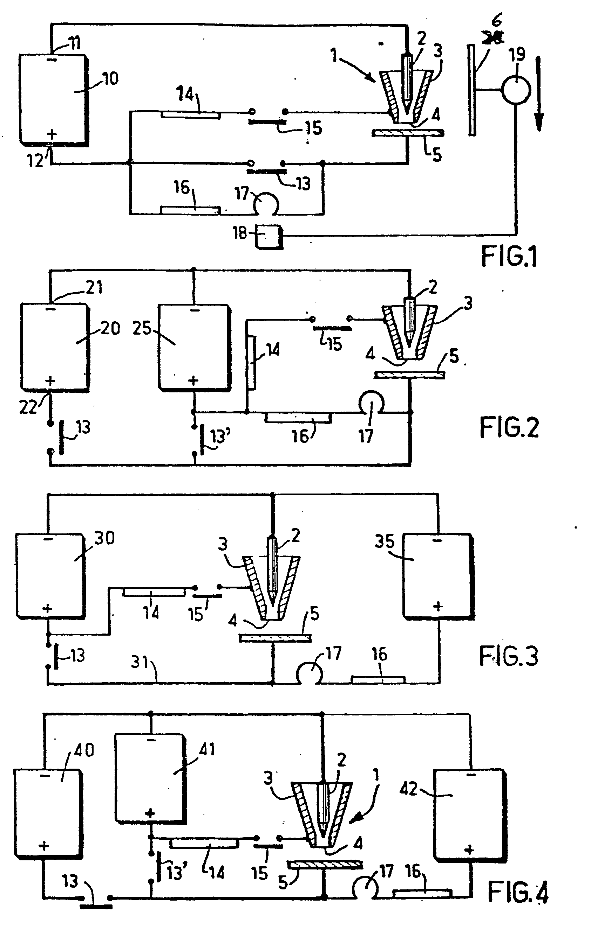

A titre d'example, en référence aux dessins annexés dans lesquels les figures 1 à 4 sont des vues schématiques de quatre formes de réalisation d'une installation selon l'invention.

En se référant à la figure 1, une torche de soudage 1 est constituée essentiellement d'une électrode réfractaire 2 axialement disposée à l'intérieur d'une tuyère 3 présentant un débouché étranglé 4 en regard d'une pièce à couper 5. Un gaz plasmagène s'écoule par des moyens non représentés dans l'espace intersticiel entre l'électrode 2 et la tuyère 3. Un générateur électrique 10 de courent continu a sa borne négative 11 raccordée à l'électrode 2 et sa borne positive 12 raccordée par un contact 13 à la pièce à souder 5 constituant ainsi le circuit de puissance de coupage. Une première dérivation incluant une résistance 14 et un contact 15 s'établit entre la borne positive 12 du générateur 10 et la tuyère 3, de façon à pouvoir établir un arc d'allumage de faible puissance entre l'électrode 2 et la tuyère 3.

Une seconde dérivation s'établit entre cette même borne positive 12 du générateur 10 et la pièce 5 et inclut une résistance 16 et un enroulement d'excitation 17 d'un relais 18 agissant sur un moteur 19 commandant le déplacement d'un support de torche 6 selon une direction normale au plan de la pièce 5 qui.est ici, par exemple, une tôle.

Le fonctionnement de l'installation est le suivant: au départ, le support de torche 6 est éloigné de la pièce 5. On établit l'arc d'allumage entre électrode 2 et tuyère 3 par fermeture du contact 15 et l'on prévoit la mise en route du moteur d'avance 19 permettant l'approche de la torche 1 vers la pièce 5. Une fois que la distance correcte de coupage a été atteinte, une arc de faible puissance s'établit entre l'électrode 2 et la pièce 5 dont l'intensité sera, par exemple, limitée à quelques ampères grâce à la présence de la résistance 16.

Ce courant suffit cependant à provoquer l'enclenchement du relais 18, via la bobine d'excitation 17 et l'arrêt immédiat du moteur 19. La torche 1 est alors en position correcte de coupage et l'arc principal de coupage est établi par simple fermeture du contact 13.

Selon la figure 2, on dispose ici d'un générateur 20 dont un pôle négatif 21 est toujours connecté à l'électrode 2 et un pôle positif 22 à la pièce à couper 5.

Ici, un second générateur 25 de faible puissance sert d'une part à l'alimentation de l'arc auxiliaire par le circuit comprenant la résistance d'allumage 14 et le contact 15, d'autre part, au circuit de détection de position comprenant la résistance 16 et la bobine d'excitation 17.

Au moment de l'établissement de l'arc principal, le contact 13' est fermé, ce qui met les deux générateurs 20 et 25 en parallèle sur la charge constituée par l'arc de coupage.

En se référant à le figure 3, on retrouve ici un générateur 30 qui sert de générateur de puissance par le circuit 31 incluant le contact 13 d'une part, et de circuit d'allumage d'arc auxiliaire entre électrode 2 et tuyère 3 incorporant la résistance 14 et le contact 15, tandis que l'alimentation de l'arc de détection entre électrode 2 et pièce 5 est assurée par un second générateur 35, via la résistance 16 et la bobine d'excitation 17.

Selon la réalisation conforme à la figure 4, on dispose ici de 3 générateurs 40, 41 et 42. Le générateur 40 servant de générateur de puissance par le contact 13 pour l'établissement de l'arc de coupage entre l'électrode 2 et la pièce 5, le générateur 41 servant de générateur d'allumage d'arc auxiliaire entre électrode 2 et tuyère 3 par le circuit incluant le résistance 14 et le contact 15 avec une dérivation par le contact 13' vers la pièce 5 de façon a, lors du coupage, surajouter sa puissance à celle du générateur 40, tandis que le générateur 42 sert par sa résistance 16 et se bobine d'excitation 17, à assurer l'établissement d'un arc de détection de la position correcte de la torche 1 au regard de la pièce 5.

L'invention s'applique au coupage plasma de pièces métalliques et plus particulièrement au coupage automatique.

**Revendications**

1. Procédé de démarrage automatique d'une torche de coupage à plasma du type à électrode (2) et tuyère (3) de formation d'un plasma, selon lequel, la torche (1) étant montée sur un support (6) à déplacement relatif d'approche et d'éloignement d'une pièce à couper (5) au moyen d'un moteur électrique (19), on provoque l'approche de ladite torche (1) vers ladite pièce à couper (5) jusqu'à l'apparition d'un signal électrique de mesure de l'écartement correct de coupage entre torche (1) et pièce (5) qui commande l'arrêt dudit moteur (19) et selon lequel, après formation d'un arc auxiliaire d'allumage entre électrode (2) et tuyère (3), on assure l'établissement d'un arc de puissance de coupage entre électrode (2) et pièce (5), caractérisé en ce que le signal électrique de commande d'arrêt du moteur (19) est constitué par un courant d'un arc de faible puissance qui s'établit directement entre électrode et pièce (5) et qui assure via un relais (17—18) l'ouverture du circuit d'alimentation du moteur électrique (19).

2. Installation de démarrage automatique d'une torche de coupage à plasma du type à électrode (2) et tuyère (3), comprenant un générateur de courant de coupage (10, 20 ou 30 ou 40), branché entre une électrode (2)˙ et une pièce (5) via un contact (13), un circuit (14—15) de formation d'un arc auxiliaire d'allumage entre électrode (2) et tuyère (3), des moyens de déplacement relatif (6—19) de la torche (1) par rapport à la pièce (5) comprenant un moteur électrique (19), caractérisée en ce qu'elle comporte en outre un circuit de formation d'arc de faible puissance entre électrode (2) et pièce (5), incorporant un enroulement d'excitation (17) d'un relais (18) placé dans un circuit d'alimentation dudit moteur (19).

3. Installation de démarrage automatique d'une torche de coupage à plasma, selon la revendication 2, caractérisée en ce que le circuit d'arc de faible puissance incorporant l'enroulement d'excitation (17) est branché avec une résistance (16) aux bornes du contact (13).

4. Installation de démarrage automatique d'une torche de coupage à plasma, selon la revendication 2, caractérisée en ce que le circuit d'arc de faible puissance incorporant l'enroulement d'excitation (17) est branché avec une résistance (16) entre une borne d'un générateur d'allumage (25) pour le circuit (14—15) de formation d'un arc d'allumage et la pièce (5).

5. Installation de démarrage automatique d'une torche de coupage à plasma, selon la revendication 2, caractérisée en ce que le circuit d'arc de faible puissance incorporant l'enroulement d'excitation (17) est brancé avec une résistance (16) entre une borne d'un générateur de détection (42) et la pièce (5).

## Patentansprüche

1. Verfahren zum automatischen Anlassen eines Plasmaschneidbrenners mit einer Elektrode (2) und einer Düse (3) zur Bildung eines Plasmas, bei welchem der Brenner (1) auf einem Träger (6) zur relativen Verschiebung eines zu schneidenden Stückes (5) unter Annäherung und Entfernen desselben mittels eines Elektromotors (19) angebracht ist, wobei der Brenner (1) zu diesem zu schneidenden Stück (5) angenähert wird, bis ein elektrisches Signal zur Maßgabe der richtigen Schneidentfernung zwischen dem Brenner (1) und dem Stück (5) erscheint, welches das Anhalten des Motors (19) steuert, und wonach nach Bildung eines Hilfszündbogens zwischen der Elektrode (2) und der Düse (3) ein Leistungsschneidbogen zwischen der Elektrode (2) und dem Stück (5) gebildet wird, dadurch gekennzeichnet, daß das elektrische Signal zur Steuerung des Anhaltens des Motors (19) durch einen Bogenstrom schwacher Leistung gebildet wird, der sich direkt zwischen der Elektrode und dem Stück (5) bildet und über ein Relais (17—18) das Öffnen des Versorgungsstromkreises des elektrischen Motors (19) sicherstellt.

2. Anlage zum automatischen Anlassen bzw. Starten eines Plasmaschneidbrenners mit einer Elektrode (2) und einer Düse (3), die einen Schneidstromgenerator (10, 20 oder 30 oder 40), der über einen Kontakt (13) zwischen einer Elektrode (2) und einem Werkstück (5) geschaltet ist, eine Schaltung (14—15) zur Bildung eines Zündhilfsbogens zwischen der Elektrode (2) und der Düse (3) und Mittel (6—19) zum Verschieben des Brenners (1) relativ zum Werkstück (5) mit einen Elektromotor (19) aufweist, dadurch gekennzeichnet, daß sie ferner einen Schaltkreis zur Bildung eines Bogens schwacher Leistung zwischen Elektrode (2) und Werkstück (5) unter Einschluß einer Steuerwicklung (17) eines Relais (18) aufweist, welches in einem Speisestromkreis des genannten Motors (19) angeordnet ist.

3. Anlage zum automatischen Starten eines Plasmaschneidbrenners nach Anspruch 2, dadurch gekennzeichnet, daß der Bogenstromkreis schwacher Leistung, welcher die Steuerwicklung (17) aufweist, mit einem Widerstand (16) an die Klemmen des Kontaktes (13) geschaltet ist.

4. Anlage zum automatischen Starten eines Plasmaschneidbrenners nach Anspruch 2, dadurch gekennzeichnet, daß der Bogenstromkreis schwacher Leistung, welcher die Steuerwicklung (17) aufweist, mit einem Widerstand (16) zwischen einer Klemme eines Zündgenerators (25) für den Schaltkreis (14—15) zur Bildung eines Zündbogens und dem Werkstück (5) geschaltet ist.

5. Anlage zum automatischen Anlassen eines Plasmaschneidbrenners nach Anspruch 2, dadurch gekennzeichnet, daß der Stromkreis des Bogens mit schwacher Leistung, welcher die Steuerwicklung (17) aufweist, mit einem Widerstand (16) zwischen einer Klemme eines Erfassungsgenerators (42) und dem Werkstück (5) geschaltet ist.

## Claims

1. Method for automatically starting a plasma cutting torch of the type having an electrode (2) and nozzle (3) for forming a plasma, according to which the torch (1) is mounted on a support (6) for displacing relatively under approach and removal of a work piece (5) to be cut by means of an electrical motor (19), whereby the said torch (1) is approached towards the said work piece to be cut (5) until an electrical signal to measure the correct cutting distance between torch (1) and work piece (5) appears commanding the stop of the said motor (19), and according to which after formation of an auxiliar ignition arc between electrode (2) and nozzle (3) formation of a power cutting arc between electrode (2) and work piece (5) is assured, characterized by that the electrical signal for controlling the stop of the motor (19) is formed by an arc current of small power which is established directly between electrode and work piece (5) and which assures opening of the supply circuit for the electrical motor (19) through a relais (17—18).

2. Installation for automatically starting a plasma cutting torch of the type having an electrode (2) and a nozzle (3), comprising a generator (10, 20 or 30 or 40) generating cutting current and connected between electrode (2) and work piece (5) through a contact (13), a circuit (14—15) to form an auxiliar ignition arc between electrode (2) and nozzle (3), and comprising means (6—19) for displacing relatively the torch (1) to the work piece (5) comprising an electrical motor (19), characterised by that it comprises furthermore a circuit for forming an arc of small power between electrode (2) and work piece (5), incorporating a control winding (17) of a relais (18) located in a supply circuit for the motor (19).

3. Installation for automatically start a plasma cutting torch according to claim 2, characterized by that the arc circuit of small power incorporating the control winding (17) is connected to the terminals of the contact (13) with a resistance (16).

4. Installation for automatically starting a plasma cutting torch according to claim 2, characterized by that the arc circuit of small power incorporating the control winding (17) is

# 0014613

connected between a terminal of a ignition generator (25) for the circuit (14—15) for forming an ignition arc with a resistance (16), and the work piece (5).

5. Installation for automatically start a plasma cutting torch according to claim 2, characterized by that the arc circuit of small power incorporating the control winding (17) is connected between a terminal of a detection generator (42) with a resistance (16) and the work piece (5).

0014613

FIG.1

FIG.2

FIG.3

FIG.4

1